# EUROPEAN PATENT SPECIFICATION

(11) **EP 3 163 215 B1**
(45) Date of publication and mention of the grant of the patent: **13.03.2019**
(21) Application number: 15192217.6
(22) Date of filing: 29.10.2015
(51) Int. Cl.: F24S 23/74, F24S 50/40, F24S 20/20, F24S 30/425

(54) **SOLAR HEAT COLLECTING SYSTEM, AND APPARATUS AND METHOD OF CONTROLLING THE SAME**
SOLARWÄRMESAMMELANLAGE UND VORRICHTUNG UND STEUERUNGSVERFAHREN DAFÜR
SYSTÈME DE COLLECTE DE CHALEUR SOLAIRE ET APPAREIL ET PROCÉDÉ DE COMMANDE DE CELUI-CI

(43) Date of publication of application: 03.05.2017
(73) Proprietor: Kabushiki Kaisha Toshiba, Tokyo 105-8001 (JP)
(72) Inventor: GOTO, Koichi, Tokyo, 105-8001 (JP); TAKAHASHI, Masahiko, Tokyo, 105-8001 (JP); YAMASHITA, Katsuya, Tokyo, 105-8001 (JP); OKITA, Nobuo, Tokyo, 105-8001 (JP)
(74) Representative: Moreland, David

(56) References cited:
- EP-A2- 2 570 748
- WO-A1-2015/155771
- CA-A1- 2 129 600
- US-A- 4 207 866
- US-A1- 2005 126 560
- US-A1- 2010 206 296
- US-A1- 2013 118 477
- US-B1- 6 363 928

## Description

### FIELD

Embodiments described herein relate to a solar heat collecting system, and an apparatus and a method of controlling the same.

### BACKGROUND

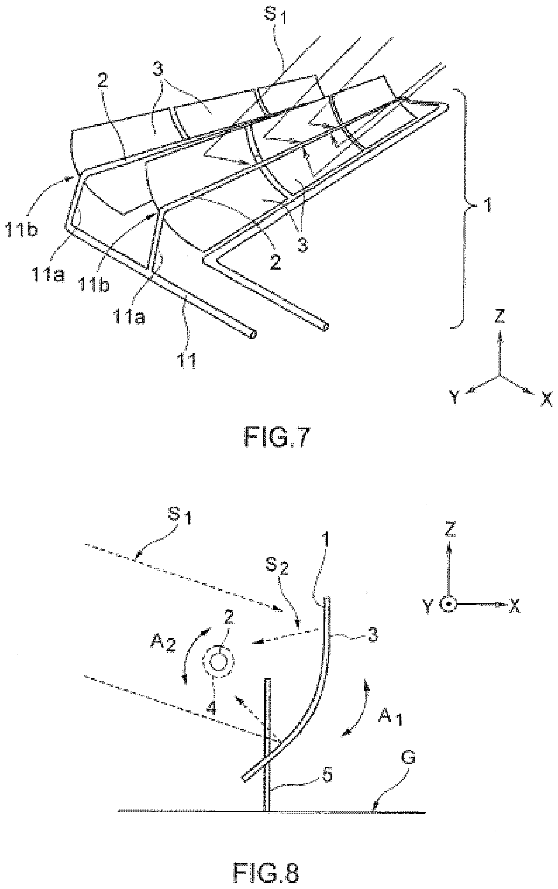

FIGS. 7 and 8 are a perspective view and a sectional view illustrating a structure of a conventional heat collector 1, respectively. Reference characters X and Y denote horizontal directions that are perpendicular to each other. Reference character Z denotes a vertical direction. FIG. 8 illustrates a section of the heat collector 1 illustrated in FIG. 7.

The heat collector 1 illustrated in FIGS. 7 and 8 is provided in a solar heat collecting system that collects solar heat from sunrays S₁. Types of the solar heat collecting system generally include a trough type, a Fresnel type, a tower type and the like. The above mentioned solar heat collecting system is a trough type.

The heat collector 1 includes heat collecting pipes 2, reflecting mirrors 3, transparent pipes 4 and supports 5. Reference numeral 11 denotes a pipe in the solar heat collecting system. The pipe 11 includes a plurality of branch pipes 11a. The heat collecting pipes 2 configure a part of the branch pipes 11a. FIG. 8 illustrates a section of a heat collecting pipe 2 and a reflecting mirror 3.

As illustrated in FIG. 7, each of the reflecting mirrors 3 has a curved shape that is long in a horizontal direction. As illustrated in FIG. 8, the section perpendicular to the longitudinal direction of the reflecting mirror 3 is a parabola. The heat collector 1 is set on a ground G. The heat collector 1 rotates and drives the reflecting mirror 3 so as to make a center axis (a straight line connecting a focal point and an apex) of the parabola parallel to the sunrays S₁. That is, the reflecting mirror 3 is rotated in response to the change of the altitude of the sun to track the sun.

The heat collecting pipe 2 is a pipe arranged in parallel to the horizontal axes of the reflecting mirrors 3 and is arranged at the focal points of (the parabolas of) the reflecting mirrors 3. When the center axes of the reflecting mirrors 3 are parallel to the sunrays S₁, the sunrays S₁ are reflected by the reflecting mirrors 3 and condensed at the heat collecting pipe 2. Reference character S₂ denotes a reflected light of the sunray S₁. The heat collecting pipes 2 are metal pipes, for example.

The rotation center of the reflecting mirror 3 may match the focal point of the reflecting mirror 3 or may not match the focal point of the reflecting mirror 3. In FIG. 8, the rotation center of the reflecting mirror 3 is the end of the support 5 and the reflecting mirror 3 rotates in a direction of an arrow A₁. Since the heat collecting pipe 2 and the reflecting mirror 3 are coupled and integrated, the heat collecting pipe 2 rotates and moves in a direction of an arrow A₂ in response to the ration of the reflecting mirror 3. Since the heat collecting pipe 2 and the reflecting mirror 3 are coupled and integrated, the rotation/movement center of the heat collecting pipe 2 matches the rotation center of the reflecting mirror 3. From a viewpoint of a phase in the peripheral direction of the heat collecting pipe 2, rotation of the reflecting mirror 3 has no influence in a surface area of the heat collecting pipe 2 that is nearest to the reflecting mirror 3.

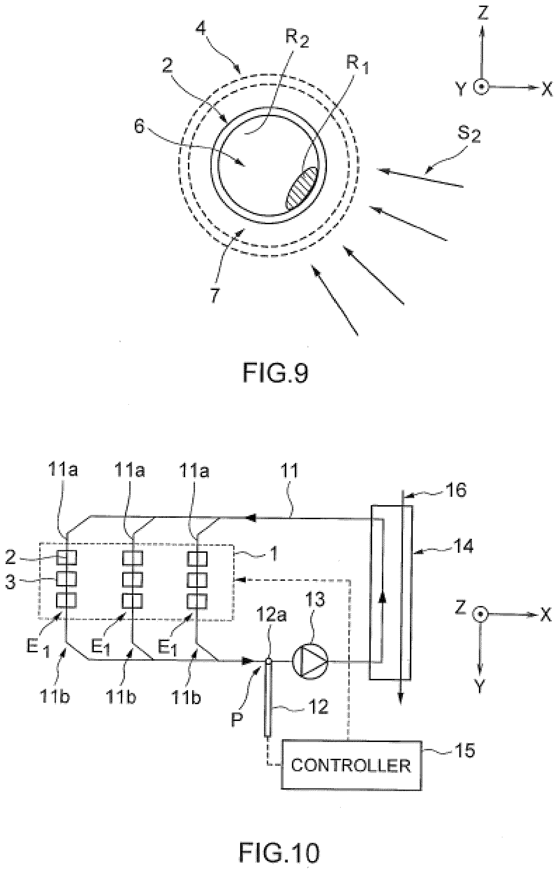

FIG. 9 is an enlarged sectional view illustrating the structure of the conventional heat collector 1.

A heat medium 6 circulates in the heat collecting pipe 2. The heat medium 6 is oil, for example. The heat medium 6 flows in from one end of the heat collecting pipe 2 and flows out from the other end of the heat collecting pipe 2. The heat medium 6 is heated by the condensed reflected lights S₂.

A part adjacent to the reflecting mirror 3 of the heat collecting pipe 2, that is, a part where the reflected lights S₂ are condensed of the heat collecting pipe 2 is positioned in the transparent pipe 4. The transparent pipe 4 is a glass pipe, for example. A space between the heat collecting pipe 2 and the transparent pipe 4 is preferably a vacuum 7. However, air may exist between the heat collecting pipe 2 and the transparent pipe 4 depending on a sealing structure between the heat collecting pipe 2 and the transparent pipe 4.

FIG. 10 is a schematic diagram illustrating a configuration of a conventional solar heat collecting system.

The solar heat collecting system in FIG. 10 includes the heat collector 1, the pipe 11, a temperature sensor 12 including a temperature sensing portion 12a, a pump 13, a heater 14 and a controller 15.

The heat medium 6 having been heated by the heat collector 1 is transferred through the pipe 11 to the heater 14 by the pump 13 to heat a heating target fluid 16 in the heater 14. For example, when the solar heat collecting system is a solar power station, the heating target fluid 16 is an operation fluid of a steam turbine. The heat medium 6 having been discharged from the heater 14 is transferred through the pipe 11 back to the heat collector 1. In this way, the heat medium 6 in the solar heat collecting system in FIG. 10 circulates between the heat collector 1 and the heater 14 through the pipe 11.

When the heat medium 6 is heated to a sufficiently high temperature, the property of the heat medium 6 deteriorates due to thermal denaturation and the function of the heat medium 6 is decreased. Accordingly, in the solar heat collecting system, an allowable upper limit temperature of the heat medium 6 is determined. The solar heat collecting system is operated with the temperature of the heat medium 6 being set to be lower than the allowable upper limit temperature. For example, when the heat medium 6 is oil, the allowable upper limit temperature of the heat medium 6, which depends on the type of oil, is usually set to about 300 to 350°C to provide a margin for the temperature of the heat medium 6.

In the flow passage for the heat medium 6, exits E₁ of the heat collector 1 are points where the temperature of the heat medium 6 becomes highest generally. The exits E₁ of the heat collector 1 are positions of the last reflecting mirrors 3 at the final stages of the respective heat collecting pipes 2. The temperature of the heat medium 6 decreases as the heat medium 6 goes further from the exits E₁ of the heat collector 1. However, in the solar heat collecting system in FIG. 10, the pipe 11 is covered with heat reserving materials at positions downstream of the exits E₁ of the heat collector 1, and decrease in the temperature of the heat medium 6 in the area downstream of the exits E₁ of the heat collector 1 is small.

The temperature sensing portion 12a in FIG. 10 is arranged at a point P of the pipe 11. The point P is referred to as a temperature measurement point of the temperature sensor 12. The temperature measurement point P in FIG. 10 is far from the respective exits E₁ of the heat collector 1. Thus, although the pipe 11 is covered with a heat reserving material, the temperature of the heat medium 6 slightly decreases before the heat medium 6 reaches the temperature measurement point P from the exits E₁ of the heat collector 1. Accordingly, the allowance upper limit temperature in the solar heat collecting system in FIG. 10 is preferably set to be lower than the above example of the allowance upper limit temperature (about 300 to 350°C).

To measure the temperature of the heat medium 6 precisely, the temperature sensor 12 is sufficiently inserted into the heat collecting pipe 2, normally. For example, the temperature sensor 12 is a thermocouple. The end of the thermocouple as a hot contact point (the temperature sensing portion 12a) is normally placed in the vicinity of the center axis of the heat collecting pipe 2. FIG. 10 illustrates the temperature sensor 12 together with the signal line thereof.

When the temperature of the heat medium 6 exceeds the allowable upper limit temperature, the controller 15 rotates and drives the reflecting mirrors 3 to make the respective center axes of the reflecting mirrors 3 nonparallel with the sunrays S₁. Accordingly, the reflected lights S₂ are condensed to a position other than the focal point of the reflecting mirror 3 and not all the reflected lights S₂ are condensed to a same position. However, the shape of the heat collecting pipe 2 is not a line but a column having a thickness. Accordingly, when the rotation angle of the reflecting mirror 3 is small, the reflected lights S₂ strike somewhere on the surface of the heat collecting pipe 2 and the heat collecting pipe 2 is heated. For this reason, the controller 15 rotates and drives the reflecting mirrors 3 at an angle not to condense the reflected lights S₂ to the heat collecting pipe 2. As a result, a heating amount of the heat collecting pipes 2 becomes sufficiently small and the temperature of the heat medium 6 decreases to be lower than the allowable upper limit temperature.

The above description is based on the assumption of the solar heat collecting system being a trough type. However, the same is true in a Fresnel-type or tower-type solar heat collecting system.

EP 2570748 A2, US2013/0118477 A1,US 2010/0206296 A1, US 6363928 B1, US 2005/126560 A1 and CA 2129600 disclose a system including a heat medium pipe which circulates a heat medium and is provided with a temperature sensor for measuring the temperature of the heat medium or heat medium pipe.

### BRIEF DESCRIPTION OF THE DRAWINGS

FIG. 1 is a schematic diagram illustrating a configuration of a solar heat collecting system of a first embodiment;
FIG. 2 is a sectional view illustrating a structure of a heat collector in the first embodiment;
FIG. 3 is another sectional view illustrating the structure of the heat collector in the first embodiment;
FIG. 4 is a graph showing an example of a heat medium temperature in the solar heat collecting system of the first embodiment;
FIG. 5 is a sectional view illustrating a structure of the heat collector in a modification of the first embodiment;
FIG. 6 is a schematic diagram illustrating a configuration of a solar heat collecting system of a second embodiment;
FIG. 7 is a perspective view illustrating a structure of a conventional heat collector;
FIG. 8 is a sectional view illustrating the structure of the conventional heat collector;
FIG. 9 is an enlarged sectional view illustrating the structure of the conventional heat collector; and
FIG. 10 is a schematic diagram illustrating a configuration of a conventional solar heat collecting system.

### DETAILED DESCRIPTION

Embodiments will now be explained with reference to the accompanying drawings.

As illustrated in FIG. 9, the reflected lights S₂ strike on a surface part nearer to the reflecting mirror 3 of the heat collecting pipe 2. The heat collecting pipe 2 is usually made of metal. Accordingly, the surface part nearer to the reflecting mirror 3 of the heat collecting pipe 2 is heated by the reflected lights S₂ while a surface part at an opposite side to the reflecting mirror 3 is heated by heat transferred through the heat collecting pipe 2. Thus, the temperature of the heat collecting pipe 2 at the side nearer to the reflecting mirror 3 is higher than that at the side opposite to the reflecting mirror 3.

The heat medium 6 flowing through the heat collecting pipe 2 is heated by the inner wall of the heat collecting pipe 2. Accordingly, the heat medium 6 in the region R₁ nearer to the reflecting mirror 3 is heated more than the heat medium 6 in the region R₂ further from the reflecting mirror 3. In FIG. 9, the region R₁ is hatched.

However, when the flow rate of the heat medium 6 is sufficiently high, the in-pipe flow velocity of the heat medium 6 is high and the heat medium 6 is sufficiently stirred. Accordingly, the temperature distribution of the heat medium 6 that is illustrated in the section of the heat collecting pipe 2 in FIG. 9 is nearly uniform.

An amount of heat that the heat collector 1 receives from the sunrays S₁ and S₂ depends on the altitude of the sun and weather. Thus, the heater 14 adjusts the amount of heat of the heat medium 6 to heat the heating target fluid 16 in response to increase and decrease in the flow rate of the heat medium 6.

When the heat collector 1 receives a large amount of heat from the sunrays S₁ and S₂ but the flow rate of the heat medium 6 is low, the heat medium 6 is not sufficiently stirred and the temperature stratification of the heat medium 6 is caused. Thus, the temperature distribution of the heat medium 6 in the section of the heat collecting pipe 2 is non-uniform. That is, in the section of the heat collecting pipe 2, the temperature of the heat medium 6 in the region R₁ nearer to the reflecting mirror 3 is higher than that in the region R₂ further from the reflecting mirror 3.

When bent portions 11b are positioned at positions downstream of the heat collecting pipe 2 on the pipe 11, that is, at positions downstream of respective portions to be heated by the reflected lights S₂ on the pipe 11, the heat medium 6 flowing through the pipe 11 is stirred at the bent portions 11b. In this case, the temperature distribution of the heat medium 6 is non-uniform in the section of the pipe 11 at a point upstream of the bent portion 11b and is nearly uniform in the section of the pipe 11 at a position downstream of the bent portion 11b.

Therefore, to obtain a substantially same measured value of the temperature, the temperature sensing portions 12a can be placed at any position in the pipe 11 as long as the temperature sensing portions 12a are placed downstream of the respective bent portions 11b. In this case, the measured temperature value is close to an average temperature of the heat medium 6 in the sections of the pipe 11 at positions upstream of the respective bent portions 11b.

For example, when a ball joint is arranged at the pipe 11 downstream of the heat collecting pipe 2 and the pipe 11 does not move in the area downstream of the ball joint, the bent portion 11b is provided at the time of arranging the ball joint. In this case, the temperature measurement position P is positioned downstream of the bent portions 11b as illustrated in FIG. 10, the temperature distribution of the heat medium 6 at the temperature measurement position P is nearly uniform.

However, even when the measured temperature at the downstream position where the heat medium 6 is sufficiently stirred is equal to or lower than the allowable upper limit temperature, there is a possibility that the temperature of the heat medium 6 locally exceeds the allowable upper limit temperature at a position (for example, the exit E₁ of the heat collector 1) upstream of the bent portions 11b. More specifically, there is a possibility that the temperature of the heat medium 6 exceeds the allowable upper limit temperature in the region R₁ that is nearer to the reflecting mirror 3.

When the temperature of the heat medium 6 locally exceeds the allowable upper limit temperature, the property of the heat medium 6 deteriorates at the relevant local point. Accordingly, even when the measured temperature by the temperature sensor 12 is equal to or lower than the allowable upper limit temperature, there is a possibility that the property of the heat medium 6 deteriorates. For example, when the measured temperature by the temperature sensor 12 is equal to the allowable upper limit temperature, the temperature of the heat medium 6 exceeds the allowable upper limit temperature at a certain position of the exits E₁ of the heat collector 1.

In one embodiment, a solar heat collecting system includes a heat collector configured to heat a heat medium by a sunray. The system further includes a heater configured to heat a heating target fluid by the heat medium. The system further includes a heat medium pipe configured to circulate the heat medium between the heat collector and the heater. The system further includes a first pipe portion extending from an exit of the heat collector toward the heater and a second pipe portion extending from the heater toward the heat collector. The system further includes a temperature sensor configured to measure a temperature of the heat medium flowing from the exit of the heat collector toward the heater, at a position located upstream of an initial bent portion of the first pipe portion, the initial bent portion being located most upstream among bent portions of the first pipe portion. The system further includes a controller configured to control heating of the heat medium in accordance with the temperature of the heat medium measured by the temperature sensor.

### (First Embodiment)

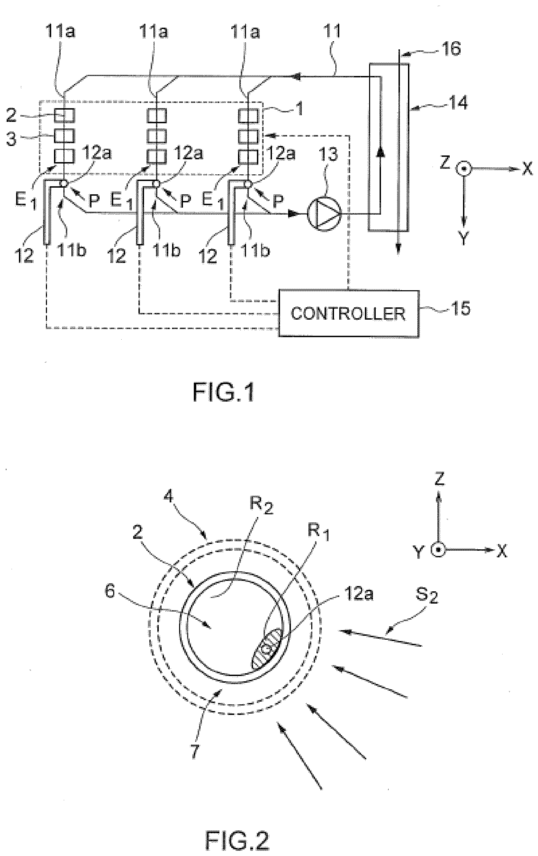

FIG. 1 is a schematic diagram illustrating a configuration of a solar heat collecting system of a first embodiment. The configuration of the solar heat collecting system of the present embodiment will be described by focusing on differences from the configuration illustrated in FIGS. 7 to 10.

The pipe 11 in FIG. 1 includes the branch pipes 11a. The heat collecting pipes 2 of the heat collector 1 configure a part of these branch pipes 11a. Reference character 11b denotes an initial bent portion of each branch pipe 11a in a region where each branch pipe 11a extends from the heat collector 1 toward the heater 14. In other words, reference character 11b denotes the bent portion located most upstream among bent portions located in the vicinity of an exit E₁ of the heat collector 1 and located downstream of the heat collector 1. The pipe 11 is an example of a heat medium pipe.

The solar heat collecting system in FIG. 1 includes a plurality of the temperature sensors 12. The temperature sensing portions 12a of these temperature sensors 12 are arranged in the branch pipes 11a. More specifically, the temperature sensing portions 12a are arranged in the branch pipes 11a in regions where the branch pipes 11a extend from the heat collector 1 toward the heater 14, and are arranged positions located upstream of the initial bent portions 11b. FIG. 1 illustrates a situation where the temperature sensing portions 12a are arranged downstream of the exits E₁ of the heat collector 1 and are arranged upstream of the initial bent portions 11b.

Accordingly, the temperature sensors 12 in the present embodiment can measure the temperature of the heat medium 6 flowing from the heat collector 1 toward the heater 14 at the positions located upstream of the initial bent portions 11b of the branch pipes 11a in the regions where the branch pipes 11a extend from the heat collector 1 toward the heater 14. Reference character P denotes temperature measurement positions of the temperature sensors 12. The temperature measurement positions P may be positioned in the heat collecting pipes 2 or may be positioned in the branch pipes 11a other than the heat collecting pipes 2.

The controller 15 in the present embodiment controls heating of the heat medium 6 in accordance with the temperature of the heat medium 6 measured by the temperature sensors 12. More specifically, as illustrated in FIG. 1, the controller 15 controls heating of the heat medium 6 by rotating and driving the reflecting mirrors 3 of the heat collector 1. Detailed descriptions of operation of the controller 15 will be given later.

FIG. 2 is a sectional view illustrating a structure of the heat collector 1 in the first embodiment. FIG. 2 illustrates a section perpendicular to a pipe-axis direction (Y direction) of the heat collecting pipe 2.

Among regions in the heat collecting pipe 2, FIG. 2 illustrates a region R₁ nearer to the reflecting mirror 3 and a region R₂ further from the reflecting mirror 3. The heat medium 6 in the region R₁ nearer to the reflecting mirror 3 is heated more than the heat medium 6 in the region R₂ further from the reflecting mirror 3. In FIG. 2, the region R₁ is hatched.

The temperature sensing portion 12a in the present embodiment is arranged in the region R₁ that is nearer to the reflecting mirror 3. The reason for this arrangement will be described later. In this way, the temperature sensor 12 in the present embodiment measures the temperature of the heat medium 6 at a position nearer to the reflecting mirror 3 rather than the center axis of the heat collecting pipe 2, for example, a position in the region R₁.

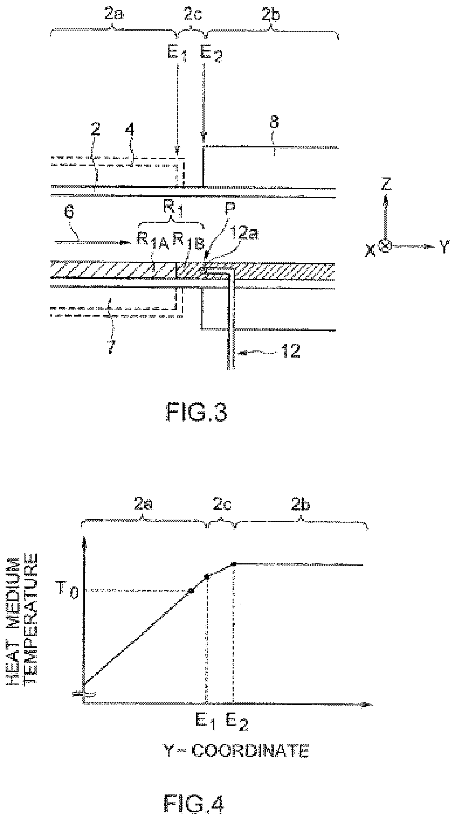

FIG. 3 is another sectional view illusrtating the structure of the heat collector 1 in the first embodiment. FIG. 3 illustrates a section parallel to the pipe-axis direction (Y direction) of the heat collecting pipe 2.

The heat collecting pipe 2 in the present embodiment includes a first portion 2a that is covered with the transparent pipe 4 and a second portion 2b that is covered with the heat reserving material 8. The second portion 2b is positioned downstream of the first portion 2a and upstream of the initial bent portion 11b. The heat collecting pipe 2 in the present embodiment further includes a third portion 2c between the first portion 2a and the second portion 2b. The third portion 2c is not covered with the transparent pipe 4 or the heat reserving material 8.

Reference character E₁ denotes a boundary between the first portion 2a and the third portion 2c. The boundary E₁ corresponds to an exit of the heat collector 1. Reference character E₂ denotes a boundary between the third portion 2c and the second portion 2b.

It is not preferable that the third portion 2c exists. However, in some cases, the third portion 2c is generated by production of the heat collector 1. FIG. 3 illustrates a case where the third portion 2c exists. In the third portion 2c, the heating amount (the received heat amount) by the sunrays S₁ and S₂ is usually larger than the radiated heat amount from the surface of the heat collecting pipe 2. Consequently, the heat medium 6 in the third portion 2c is heated.

Therefore, the heat collecting pipe 2 is heated in the first and third portions 2a and 2c. The heat medium 6 in the heat collecting pipe 2 is heated not only in the first portion 2a but also in the third portion 2c. When the heat collecting pipe 2 has the third portion 2c, the boundary E₂ corresponds to a substantial exit of the heat collector 1.

FIG. 3 illustrates the region R1 nearer to the reflecting mirror 3 in the heat collecting pipe 2. Reference character R_{1A} denotes the region R₁ in the first portion 2a. Reference character R_{1B} denotes the region R₁ in the second and third portions 2b and 2c.

The temperature sensing portion 12a in the present embodiment is arranged in the region R_{1B}, and more specifically, in the region R₁ in the second portion 2b. The temperature sensing portion 12a is preferably arranged on the boundary E₂ or in the vicinity of the boundary E₂. In this case, the temperature sensor 12 can measure a temperature that is close to the maximum temperature of the heat medium 6 in the heat collecting pipe 2. A modification in which the temperature sensing portion 12a is arranged in the region R₁ in the third portion 2c will be described later.

The temperature sensor 12 preferably has a bar or line shape and is bent, as illustrated in FIG. 3. This shape can make the length of the temperature sensor 12 in the region R_{1B} sufficiently longer than the outer diameter of the temperature sensor 12. As a result, the temperature sensor 12 receives a reduced influence of the temperature of the heat collecting pipe 2. The temperature sensor 12 pierces through the heat collecting pipe 2 and the heat reserving material 8. A portion where the temperature sensor 12 pierces the heat collecting pipe 2 is sealed. The sealed portion prevents the heat medium 6 from flowing out from the heat collecting pipe 2.

FIG. 3 illustrates the temperature sensor 12 together with a signal line thereof. Since the temperature sensing portions 12a in the present embodiment are provided in the respective heat collecting pipes 2, the signal lines of the temperature sensors 12 move with the rotational movements of the respective heat collecting pipes 2. In this case, a malfunction such as disconnection of the signal line may be generated.

Therefore, in the present embodiment, the signal lines of the temperature sensors 12 are arranged so as to creep on the surface of the pipe 11 (more specifically, the surface of the heat reserving material 8) from a part of the pipe 11 in the vicinity of the temperature sensing portion 12a to a part of the pipe 11 that is not moved by the rotation of the heat collecting pipe 2. In this case, the signal lines are arranged so that the signal lines are not stretched but sufficiently warped in the vicinities of the respective bent portions of the pipe 11. This arrangement can prevent a malfunction such as disconnection of the signal lines at the bent portions of the pipe 11 or the like. The initial bent portion 11b is an example of such a bent portion. Such a bent portion exists at the position of the ball joint of the pipe 11, for example.

For example, the heat collecting pipe 2 and the transparent pipe 4 are made of metal and glass, respectively. In this case, increase in the temperatures of the heat collecting pipe 2 and the transparent pipe 4 generates a thermal expansion difference between the heat collecting pipe 2 and the transparent pipe 4. In the solar heat collecting system of the present embodiment, the structure is devised to prevent the thermal expansion difference from breaking the heat collecting pipe 2 and the transparent pipe 4, though the illustration of the devised structure is omitted.

FIG. 4 is a graph showing an example of a heat medium temperature in the solar heat collecting system of the first embodiment.

The ordinate in FIG. 4 represents the temperature of the heat medium 6 in the region R₁ of the heat collecting pipe 2. The abscissa in FIG. 4 represents the Y coordinate of a point in the region R₁ of the heat collecting pipe 2.

In the graph shown in FIG. 4, the temperature of the heat medium 6 increases with increase in the Y coordinate in the first portion 2a. The reason for this is that the heat medium 6 is heated by the heat collector 1. The temperature of the heat medium 6 also increases with increase in the Y coordinate in the third portion 2c. The reason for this is that the heat medium 6 having been discharged from the exit E₁ of the heat collector 1 is still heated (receives heat) by the sunrays S₁ and S₂ with a heating amount here being larger than the radiated amount. The temperature of the heat medium 6 is fixed or starts to decrease gently in the second portion 2b. The reason for this is that although heating of the heat medium 6 ends, the heat reserving material 8 suppresses heat radiation of the heat medium 6.

Reference character T₀ denotes the allowable upper limit temperature of the heat medium 6 in the present embodiment. The allowable upper limit temperature T₀ in the present embodiment is predetermined in the controller 15, for example. FIG. 4 illustrates a situation where the temperature of the heat medium 6 exceeds the allowable upper limit temperature T₀ in the first portion 2a. In this case, the temperature of the heat medium 6 measured by the temperature sensor 12 in the present embodiment exceeds the allowable upper limit temperature T₀.

Therefore, the controller 15 in the present embodiment controls heating of the heat medium 6 in accordance with the temperature of the heat medium 6 measured by the temperature sensors 12 and the allowable upper limit temperature T₀ predetermined in the controller 15 in advance.

More specifically, when the measured temperature of the heat medium 6 is lower than the allowable upper limit temperature T₀, the controller 15 controls rotation of the heat collector 1 so that the reflecting mirrors 3 track the sun. In this case, the center axis of each reflecting mirror 3 is kept parallel with the sunrays S₁ and the reflected lights S₂ continue to be condensed to the heat collecting pipe 2. Consequently, the heat medium 6 in the heat collecting pipe 2 is heated with high efficiency.

On the other hand, when the measured temperature of the heat medium 6 is higher than the allowable upper limit temperature T₀, the controller 15 controls the heat collector 1 so that the reflecting mirrors 3 stop tracking the sun and the reflecting mirrors 3 are set to face a direction not to condense the reflected lights S₂ to the heat collecting pipe 2. In this case, the central axis of each reflecting mirror 3 is not parallel with the sunrays S₁.

When the measured temperature of the heat medium 6 increases from a temperature lower than T₀ to a temperature higher than T₀, the controller 15 rotates and drives the reflecting mirrors 3 to an angle not to condense the reflected lights S₂ to the heat collecting pipe 2. As a result, the heating amount of the heat medium 6 per unit flow rate decreases from that when the reflecting mirrors 3 track the sun, and the temperature of the heat medium 6 decreases. When the measured temperature of the heat medium 6 decreases from a temperature higher than T₀ to a temperature lower than T₀, the controller 15 causes the reflecting mirrors 3 to restart tracking the sun.

The temperature sensor 12 measures the temperature of the heat medium 6 and outputs a first signal including the measured temperature of the heat medium 6. The controller 15 receives the first signal from the temperature sensor 12 and outputs a second signal to control heating of the heat medium 6 in accordance with the temperature of the heat medium 6 included in the first signal. The second signal in the preset embodiment includes a command for rotation of the heat collector 1. The temperature sensor 12 and the controller 15 are examples of the first and second signal outputting modules, respectively.

The temperature sensors 12 may be connected with the controller 15 via one or more devices that process the first signal, for example. Similarly, the controller 15 may be connected with the heat collector 1 via one or more devices that process the second signal.

Advantages of arranging the temperature sensing portions 12a of the present embodiment at positions upstream of the respective initial bent portions 11b will be described. Advantages of arranging the temperature sensing portions 12a of the present embodiment in the respective regions R₁ nearer to the reflecting mirrors 3 will be also described.

When the flow rate of the heat medium 6 is sufficiently high, the heat medium 6 is sufficiently stirred. Accordingly, the temperature distribution of the heat medium 6 in a section (a section perpendicular to the pipe axis direction) of the heat collecting pipe 2 is nearly uniform. On the other hand, when the flow rate of the heat medium 6 is low, the heat medium 6 is not sufficiently stirred. Accordingly, the temperature distribution of the heat medium 6 in a section of the heat collecting pipe 2 is non-uniform. In this case, in the section of the heat collecting pipe 2, the temperature of the heat medium 6 in the region R₁ nearer to the reflecting mirror 3 is higher than that in the region R₂ further from the reflecting mirror 3.

However, the heat medium 6 is stirred at the bent portions of the pipe 11. Accordingly, even when the flow rate of the heat medium 6 is low, the temperature distribution of the heat medium 6 downstream of the initial bent portion 11b of the pipe 11 is nearly uniform. On the other hand, the temperature distribution of the heat medium 6 upstream of the initial bent portion 11b of the pipe 11 is non-uniform.

If the temperature sensing portion 12a is arranged downstream of the initial bent portion 11b, the temperature of a part of the heat medium 6 upstream of the initial bent portion 11b may be locally higher than the allowable upper limit temperature T₀ even when the measured temperature of the heat medium 6 is lower than the allowable upper limit temperature T₀. In this case, the property of the heat medium 6 is deteriorated at this local part.

Therefore, the temperature sensing portions 12a in the present embodiment are arranged upstream of the respective initial bent portions 11b. Accordingly, before the heat medium 6 is stirred at the initial bent portions 11b, the temperature of the heat medium 6 can be measured.

Furthermore, the temperature sensing portions 12a in the present embodiment are arranged in the respective regions R₁ nearer to the reflecting mirrors 3. The reason for this is that the temperature of the heat medium 6 in the heat collecting pipe 2 becomes locally high in the region R₁ nearer to the reflecting mirror 3 and there is a high possibility that the property of the heat medium 6 is deteriorated. Therefore, in the present embodiment, the temperature sensing portions 12a are arranged in the respective regions R₁ and the temperature of the heat medium 6 can be measured in positions where the property of the heat medium 6 is likely to be deteriorated.

Moreover, the temperature sensing portions 12a in the present embodiment are arranged in the respective vicinities of the boundaries E₂ between the respective second and third portions 2b and 2c in the regions R₁. The reason for this is that the temperature of the heat medium 6 in the heat collecting pipe 2 is likely to become highest in the vicinity of the boundary E₂ in the region R₁. Therefore, according to the present embodiment, the temperature sensing portions 12a are arranged in the vicinities of the respective boundaries E₂ in R₁ so that the temperature of the heat medium 6 can be measured at portions where the property of the heat medium 6 is most likely to be deteriorated.

The temperature sensing portions 12a in the present embodiment are preferably arranged at points where the temperature of the heat medium 6 is likely to become high. The reason for this is that when the temperature of the heat medium 6 at such a point is controlled to be lower than the allowable upper limit temperature T₀, the temperature of the heat medium 6 at many points other than this point can be also controlled to be lower than the allowable upper limit temperature T₀. According to the present embodiment, the temperature sensing portion 12a is arranged at a point where the temperature of the heat medium 6 is likely to become high. Accordingly, deterioration of the property of the heat medium 6 in the entire solar heat collecting system can be prevented.

According to the present embodiment, the temperature sensing portions 12a are arranged considering a case where the flow rate of the heat medium 6 is low so that deterioration of the property of the heat medium 6 can be prevented not only in the case where the flow rate of the heat medium 6 is low but also in a case where the flow rate of the heat medium 6 is high. The reason for this is that when the flow rate of the heat medium 6 is high, the temperature distribution of the heat medium 6 is nearly uniform compared with the case where the flow rate of the heat medium 6 is low.

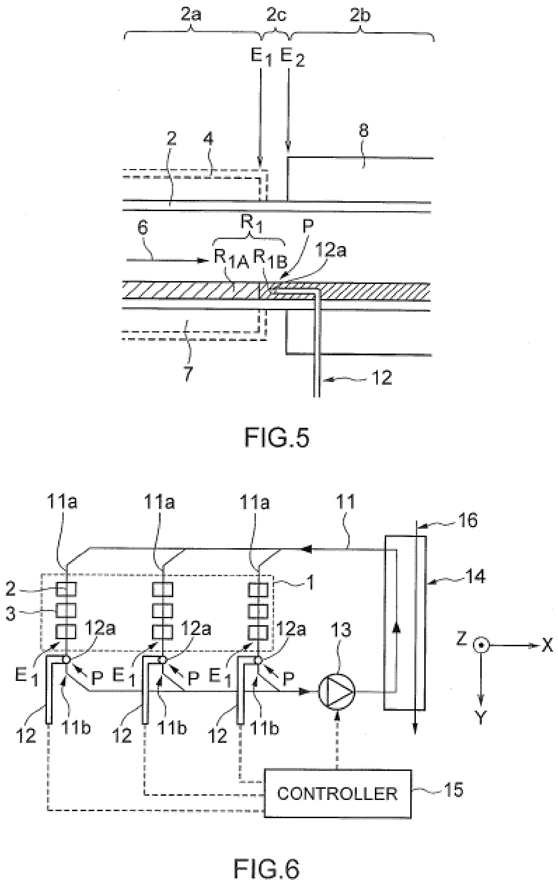

FIG. 5 is a sectional view illustrating a structure of the heat collector 1 in a modification of the first embodiment. FIG. 5 illustrates a section parallel to the pipe axis direction (Y direction) of the heat collecting pipe 2.

The temperature sensing portion 12a in the present modification is arranged not in the region R₁ in the second portion 2b but in the region R₁ in the third portion 2c. Also in this case, the temperature sensing portion 12a is preferably arranged in the vicinity of the boundary E₂ between the second portion 2b and the third portion 2c.

Arrangement of the temperature sensing portion 12a in the third portion 2c has an advantage of higher safety because increase in the temperature of the heat medium 6 can be detected at a further upstream-side position, that is, a position where the temperature is lower, compared with arrangement of the temperature sensing portion 12a in the second portion 2b. On the other hand, arrangement of the temperature sensing portion 12a in the second portion 2b has an advantage of easy manufacturing of the temperature sensor 12, compared with arrangement of the temperature sensing portion 12a in the third portion 2c. When the temperature sensing portion 12a is arranged on the boundary E₂, the above both advantages can be provided. Even when the heat reserving material 8 surrounds the second portion 2b, the temperature of the heat medium 6 is decreased slightly in the second portion 2b. Accordingly, a risk in detection at the boundary E₂ is less than that in detection at a position downstream of the boundary E₂.

As described above, the temperature sensors 12 in the present embodiment measure the temperature of the heat medium 6, at the positions located upstream of the initial bent portions 11b of the pipe 11 in the regions where the pipe 11 extends from the heat collector 1 toward the heater 14. Therefore, in the present embodiment, the temperature of the heat medium 6 is measured before the heat medium 6 is stirred at the initial bent portions 11b and it can be detected that the temperature of the heat medium 6 becomes high locally. According to the present embodiment, heating of the heat medium 6 is controlled in accordance with the detection result and deterioration of the property of the heat medium 6 can be effectively prevented.

When the temperature of the heat medium 6 measured by one of the temperature sensors 12 exceeds the allowable upper limit temperature T₀, the controller 15 in the present embodiment may stop the tracking operation of only the reflecting mirrors 3 of the corresponding heat collecting pipe 2 where the relevant temperature sensor 12 is arranged and set the above reflecting mirrors 3 to face directions not to condense the reflected lights S₂ to the heat collecting pipe 2, or may stop the tracking operation of all the reflecting mirrors 3 in the solar heat collecting system and set all the reflecting mirrors 3 to face directions not to condense the reflected lights S₂ to the heat collecting pipe 2. The reason for performing the latter control is that when the temperature of the heat medium 6 in one of the heat collecting pipes 2 is high, it is predicted that the temperature of the heat medium 6 in the other heat collecting pipes 2 is also high at the same degree.

In the present embodiment, all the heat collecting pipes 2 have the respective temperature sensors 12. However, only one of the heat collecting pipes 2 may have the temperature sensor 12. In this case, when the temperature of the heat medium 6 measured by the temperature sensor 12 exceeds the allowable upper limit temperature T₀, the controller 15 in the present embodiment stops the tracking operations of all the reflecting mirrors 3 in the solar heat collecting system and sets the reflecting mirrors 3 to face directions not to condense the reflected lights S₂ to the heat collecting pipes 2.

A configuration in which only one of the heat collecting pipes 2 includes the temperature sensor 12 has an advantage that the manufacturing cost of the solar heat collecting system is low. On the other hand, a configuration in which all the heat collecting pipes 2 have the respective temperature sensors 12 has an advantage that the temperature of the heat medium 6 can be controlled precisely to provide high safety. In the present embodiment, some of the heat collecting pipes 2, which may be two or more pipes, may have the respective temperature sensors 12.

The pipe 11 in the present embodiment branches to the plurality of branch pipes 11a. However, the pipe 11 may have a shape without a branch. Furthermore, the solar heat collecting system in the present embodiment may be a Fresnel type or a tower type.

### (Second Embodiment)

FIG. 6 is a schematic diagram illustrating a configuration of a solar heat collecting system of a second embodiment.

The controller 15 in the present embodiment controls heating of the heat medium 6 in accordance with the temperature of the heat medium 6 measured by the temperature sensors 12, similarly to the first embodiment. However, as illustrated in FIG. 6, the controller 15 in the present embodiment changes the flow rate of the heat medium 6 flowing through the pipe 11 and controls the heating amount of the heat medium 6 per unit flow rate. The flow rate of the heat medium 6 can be controlled by adjustment of the output of the pump 13.

More specifically, when the measured temperature of the heat medium 6 is lower than the allowable upper limit temperature T₀, the controller 15 adjusts the flow rate of the heat medium 6 to a first flow rate. On the other hand, when the measured temperature of the heat medium 6 is higher than the allowable upper limit temperature T₀, the controller 15 adjusts the flow rate of the heat medium 6 to a second flow rate that is higher than the first flow rate.

In this way, when the measured temperature of the heat medium 6 increases from a temperature lower than the allowable upper limit temperature T₀ to a temperature higher than T₀, the controller 15 increases the flow rate of the heat medium 6. As a result, even when the heating amount of the heat medium 6 by the heat collector 1 remains the same, the heating amount of the heat medium 6 per unit flow rate decreases by the increased amount of the flow rate of the heat medium 6. Consequently, the temperature of the heat medium 6 decreases. When the measured temperature of the heat medium 6 decreases from a temperature higher than T₀ to a temperature lower than T₀, the controller 15 decreases the flow rate of the heat medium 6.

The temperature sensor 12 measures the temperature of the heat medium 6 and outputs a first signal including the measured temperature of the heat medium 6 to the controller 15. The controller 15 receives the first signal from the temperature sensor 12 and outputs a second signal to control the heating amount of the heat medium 6 per unit flow rate to the pump 13 in accordance with the temperature of the heat medium 6 included in the first signal. The second signal in the present embodiment includes a command of the output of the pump 13. The controller 15 may be connected with the pump 13 via one or more devices that process the second signal.

The temperature sensors 12 in the present embodiment measure the temperature of the heat medium 6 flowing from the heat collector 1 toward the heater 14 at the positions located upstream of the initial bent portions 11b of the pipe 11, similarly to the first embodiment. Therefore, in the present embodiment, the temperature of the heat medium 6 is measured before the heat medium 6 is stirred at the initial bent portions 11b so that it can be detected that the temperature of the heat medium 6 locally becomes high. Consequently, according to the present embodiment, heating of the heat medium 6 is controlled by flow rate adjustment in accordance with the above detection result so that deterioration of the property of the heat medium 6 can be prevented efficiently.

Temperature control of the heat medium 6 by flow rate adjustment has an advantage that the temperature of the heat medium 6 can be decreased in a shorter time generally, compared with temperature control of the heat medium 6 by stop of tracking the sun and control of the directions of the reflecting mirrors 3. The reason for this is that the reflecting mirrors 3 are generally not rotated and driven at a high speed.

On the other hand, temperature control of the heat medium 6 by stop of tracking the sun and control of the directions of the reflecting mirrors 3 has an advantage that a degree of decline in the temperature of the heat medium 6 generally becomes large, compared with temperature control of the heat medium 6 by flow rate adjustment.

The flow rate of the heat medium 6 in the present embodiment may be controlled by adjustment of an opening degree of a valve (not illustrated) on the pipe 11, for example, instead of adjustment of the output of the pump 13.

The pipe 11 in the present embodiment branches to the plurality of branch pipes 11a. However, the pipe 11 may have a shape without a branch. The solar heat collecting system in the present embodiment may be a Fresnel type or a tower type.

A solar heat collecting system may include both a configuration capable of performing the control in the first embodiment and a configuration capable of performing the control in the second embodiment. In this case, this solar heat collecting system can provide the advantages of the both embodiments.

While certain embodiments have been described, these embodiments have been presented by way of example only, and are not intended to limit the scope of the inventions. Indeed, the novel systems, apparatuses and methods described herein may be embodied in a variety of other forms; furthermore, various omissions, substitutions and changes in the form of the systems, apparatuses and methods described herein may be made without departing from the spirit of the inventions. The accompanying claims and their equivalents are intended to cover such forms or modifications as would fall within the scope of the inventions.

## Claims

1. A solar heat collecting system comprising:
a heat collector (1) configured to heat a heat medium by a sunray;
a heater (14) configured to heat a heating target fluid by the heat medium; and
a heat medium pipe (11) configured to circulate the heat medium between the heat collector and the heater, and to include a first pipe portion extending from an exit (E₁) of the heat collector toward the heater and a second pipe portion extending from the heater toward the heat collector;
the system further comprising:
a temperature sensor (12) configured to measure a temperature of the heat medium flowing from the exit (E₁) of the heat collector toward the heater, at a position located upstream of an initial bent portion (11b) of the first pipe portion, the initial bent portion being located most upstream among bent portions of the first pipe portion; and
a controller (15) configured to control heating of the heat medium in accordance with the temperature of the heat medium measured by the temperature sensor.

2. The system of Claim 1, wherein
the heat collector includes a heat collecting pipe (2) that configures a part of the heat medium pipe, and a reflecting mirror (3) configured to concentrate the sunray to heat the heat medium in the heat collecting pipe, and
the controller controls the heating of the heat medium by rotating and driving the reflecting mirror.

3. The system of Claim 2, wherein
the controller controls the heat collector so that the reflecting mirror tracks the sun, when the temperature of the heat medium measured by the temperature sensor is lower than a predetermined upper limit temperature, and
the controller controls the heat collector so that the reflecting mirror stops tracking the sun and the reflecting mirror is set to face a direction not to concentrate the sunray to the heat collecting pipe, when the temperature of the heat medium measured by the temperature sensor is higher than the upper limit temperature.

4. The system of Claim 1, wherein the controller controls a heating amount of the heat medium per unit flow rate by changing a flow rate of the heat medium flowing through the heat medium pipe.

5. The system of Claim 4, wherein
the controller adjusts the flow rate of the heat medium to a first flow rate, when the temperature of the heat medium measured by the temperature sensor is lower than a predetermined upper limit temperature, and
the controller adjusts the flow rate of the heat medium to a second flow rate that is higher than the first flow rate, when the temperature of the heat medium measured by the temperature sensor is higher than the upper limit temperature.

6. The system of Claim 1, wherein the controller decreases a heating amount of the heat medium per unit flow rate to be smaller than that in a case where the temperature of the heat medium is lower than a predetermined upper limit temperature, when the temperature of the heat medium measured by the temperature sensor is higher than the upper limit temperature.

7. The system of Claim 1, wherein
the heat medium pipe includes a first portion (2a) covered with a transparent tube (4), and a second portion (2b) covered with a heat retaining material (8), positioned downstream of the first portion and positioned upstream of the initial bent portion, and
the temperature sensor measures the temperature of the heat medium in the second portion.

8. The system of Claim 1, wherein
the heat medium pipe includes a first portion (2a) covered with a transparent tube (4), and a second portion (2b) covered with a heat retaining material (8), positioned downstream of the first portion and positioned upstream of the initial bent portion, and a third portion (2c) positioned between the first portion and the second portion, and
the temperature sensor measures the temperature of the heat medium in the second portion, in the third portion, or on a boundary between the second portion and the third portion.

9. The system of Claim 1, wherein the temperature sensor measures the temperature of the heat medium at the position that is nearer to the reflecting mirror than a center axis of the heat collecting pipe.

10. A method of controlling a solar heat collecting system comprising:
a heat collector (1) configured to heat a heat medium by a sunray;
a heater (14) configured to heat a heating target fluid by the heat medium; and
a heat medium pipe (11) configured to circulate the heat medium between the heat collector and the heater, and to include a first pipe portion extending from an exit (E₁) of the heat collector toward the heater and a second pipe portion extending from the heater toward the heat collector;
the method comprising:
measuring a temperature of the heat medium flowing from the exit of the heat collector toward the heater, at a position located upstream of an initial bent portion (11b) of the first pipe portion, the initial bent portion being located most upstream among bent portions of the first pipe portion; and
controlling heating of the heat medium in accordance with the temperature of the heat medium measured at the position located upstream of the initial bent portion.

11. An apparatus of controlling a solar heat collecting system comprising:
a heat collector (1) configured to heat a heat medium by a sunray;
a heater (14) configured to heat a heating target fluid by the heat medium; and
a heat medium pipe (11) configured to circulate the heat medium between the heat collector and the heater, and to include a first pipe portion extending from an exit (E₁) of the heat collector toward the heater and a second pipe portion extending from the heater toward the heat collector;
the apparatus comprising:
a first signal outputting module (12) configured to measure a temperature of the heat medium flowing from the exit of the heat collector toward the heater, at a position located upstream of an initial bent portion (11b) of the first pipe portion, and to output a first signal including the measured temperature of the heat medium, the initial bent portion being located most upstream among bent portions of the first pipe portion; and
a second signal outputting module (15) configured to output a second signal to control heating of the heat medium, in accordance with the temperature of the heat medium included in the first signal.

12. The system of Claim 1, wherein the temperature sensor includes a temperature sensing portion (12a) provided in the pipe and downstream of the exit of the heat collector, and measures the temperature of the heat medium at a position of the temperature sensing portion (12a).

## Patentansprüche

1. Sonnenkollektorsystem, umfassend:
einen Wärmekollektor (1), der ausgestaltet ist, um ein Wärmemedium mittels eines Sonnenstrahls zu erwärmen;
eine Heizvorrichtung (14), die ausgestaltet ist, um ein Erwärmungszielfluid mittels des Wärmemediums zu erwärmen; und
ein Wärmemediumrohr (11), das ausgestaltet ist, um das Wärmemedium zwischen dem Wärmekollektor und der Heizvorrichtung zu zirkulieren, und um einen ersten Rohrabschnitt, der sich von einem Ausgang (E₁) des Wärmekollektors hin zu der Heizvorrichtung erstreckt und einen zweiten Rohrabschnitt, der sich von der Heizvorrichtung hin zu dem Wärmekollektor erstreckt, zu umfassen;
wobei das System überdies umfasst:
einen Temperatursensor (12), der ausgestaltet ist, um eine Temperatur des Wärmemediums, das von dem Ausgang (E₁) des Wärmekollektors hin zu der Heizvorrichtung strömt, an einer Position zu messen, die stromaufwärts eines Anfangsbiegeabschnitts (11b) des ersten Rohrabschnitts liegt, wobei der Anfangsbiegeabschnitt von Biegeabschnitten des ersten Rohrabschnitts am weitesten stromaufwärts liegt; und
eine Steuerung (15), die ausgestaltet ist, um die Erwärmung des Wärmemediums gemäß der Temperatur des Wärmemediums zu steuern, die von dem Temperatursensor gemessen wird.

2. System nach Anspruch 1, wobei
der Wärmekollektor ein Wärmesammelrohr (2), das einen Teil des Wärmemediumrohres ausgestaltet, und einen reflektierenden Spiegel (3) umfasst, der ausgestaltet ist, um den Sonnenstrahl zu bündeln, um das Wärmemedium in dem Wärmesammelrohr zu erwärmen, und
die Steuerung die Erwärmung des Wärmemediums mittels Drehen und Ansteuern des reflektierenden Spiegels steuert.

3. System nach Anspruch 2, wobei
die Steuerung den Wärmekollektor so steuert, dass der reflektierende Spiegel der Sonne folgt, wenn die Temperatur des Wärmemediums, die vom Temperatursensor gemessen wird, niedriger als eine vorbestimmte obere Grenztemperatur ist; und
die Steuerung den Wärmekollektor so steuert, dass der reflektierende Spiegel aufhört, der Sonne zu folgen und der reflektierende Spiegel so eingestellt ist, dass er einer Richtung zugewandt ist, dass er den Sonnenstrahl nicht zum Wärmesammelrohr bündelt, wenn die Temperatur des Wärmemediums, die vom Temperatursensor gemessen wird, höher ist als die obere Grenztemperatur.

4. System nach Anspruch 1, wobei die Steuerung eine Wärmemenge des Wärmemediums pro Durchflussrateneinheit steuert, indem sie eine Durchflussrate des Wärmemediums ändert, das durch das Wärmemediumrohr strömt.

5. System nach Anspruch 4, wobei
die Steuerung die Durchflussrate des Wärmemediums auf eine erste Durchflussrate einstellt, wenn die Temperatur des Wärmemediums, die von dem Temperatursensor gemessen wird, niedriger als eine vorbestimmte obere Grenztemperatur ist; und
die Steuerung die Durchflussrate des Wärmemediums auf eine zweite Durchflussrate einstellt, die größer als die erste Durchflussrate ist, wenn die Temperatur des Wärmemediums, die von dem Temperatursensor gemessen wird, größer als die vorbestimmte obere Grenztemperatur ist.

6. System nach Anspruch 1, wobei die Steuerung eine Heizmenge des Wärmemediums pro Durchflussrateneinheit verringert, sodass sie kleiner als die in einem Fall ist, in dem die Temperatur des Wärmemediums niedriger als eine vorbestimmte obere Grenztemperatur ist, wenn die Temperatur des Wärmemediums, die vom Temperatursensor gemessen wird, höher als die obere Grenztemperatur ist.

7. System nach Anspruch 1, wobei
das Wärmemediumrohr einen ersten Abschnitt (2a), der mit einem transparenten Rohr (4) bedeckt ist, und einen zweiten Abschnitt (2b), der mit einem wärmespeichernden Material (8) bedeckt ist, stromabwärts des ersten Abschnitts und stromaufwärts des Anfangsbiegeabschnitts positioniert, umfasst, und
der Temperatursensor die Temperatur des Wärmemediums in dem zweiten Abschnitt misst.

8. System nach Anspruch 1, wobei
das Wärmemediumrohr einen ersten Abschnitt (2a), der mit einem transparenten Rohr (4) bedeckt ist, und einen zweiten Abschnitt (2b), der mit einem wärmespeichernden Material (8) bedeckt ist, stromabwärts des ersten Abschnitts und stromaufwärts des Anfangsbiegeabschnitts positioniert, und einen dritten Abschnitt (2c), der zwischen dem ersten Abschnitt und dem zweiten Abschnitt positioniert ist, umfasst, und
der Temperatursensor die Temperatur des Wärmemediums in dem zweiten Abschnitt, in dem dritten Abschnitt oder an einer Grenze zwischen dem zweiten Abschnitt und dem dritten Abschnitt misst.

9. System nach Anspruch 1, wobei der Temperatursensor die Temperatur des Wärmemediums an der Position misst, die näher am reflektierenden Spiegel liegt als eine Mittelachse des Wärmesammelrohres.

10. Verfahren zum Steuern eines Sonnenkollektorsystems, umfassend:
einen Wärmekollektor (1), der ausgestaltet ist, um ein Wärmemedium mittels eines Sonnenstrahls zu erwärmen;
eine Heizvorrichtung (14), die ausgestaltet ist, um ein Erwärmungszielfluid mittels des Wärmemediums zu erwärmen; und
ein Wärmemediumrohr (11), das ausgestaltet ist, um das Wärmemedium zwischen dem Wärmekollektor und der Heizvorrichtung zu zirkulieren, und um einen ersten Rohrabschnitt, der sich von einem Ausgang (E₁) des Wärmekollektors hin zu der Heizvorrichtung erstreckt und einen zweiten Rohrabschnitt, der sich von der Heizvorrichtung hin zu dem Wärmekollektor erstreckt, zu umfassen;
wobei das Verfahren umfasst:
Messen einer Temperatur des Wärmemediums, das vom Ausgang des Wärmekollektors hin zu der Heizvorrichtung strömt, an einer Position, die sich stromaufwärts eines Anfangsbiegeabschnitts (11b) des ersten Rohrabschnitts befindet, wobei der Anfangsbiegeabschnitt von Biegeabschnitten des ersten Rohrabschnitts am weitesten stromaufwärts liegt; und
Steuern des Erwärmens des Wärmemediums gemäß der Temperatur des Wärmemediums, die an der Position gemessen wird, die sich stromaufwärts des Anfangsbiegeabschnitts befindet.

11. Vorrichtung zum Steuern eines Sonnenkollektorsystems, umfassend:
einen Wärmekollektor (1), der ausgestaltet ist, um ein Wärmemedium mittels eines Sonnenstrahls zu erwärmen;
eine Heizvorrichtung (14), die ausgestaltet ist, um ein Erwärmungszielfluid mittels des Wärmemediums zu erwärmen; und
ein Wärmemediumrohr (11), das ausgestaltet ist, um das Wärmemedium zwischen dem Wärmekollektor und der Heizvorrichtung zu zirkulieren und um einen ersten Rohrabschnitt, der sich von einem Ausgang (E₁) des Wärmekollektors hin zu der Heizvorrichtung erstreckt, und einen zweiten Rohrabschnitt, der sich von der Heizvorrichtung hin zu dem Wärmekollektor erstreckt, zu umfassen;
wobei die Vorrichtung umfasst:
ein erstes Signalausgabemodul (12), das ausgestaltet ist, um eine Temperatur des Wärmemediums, das von dem Ausgang des Wärmekollektors hin zu der Heizvorrichtung strömt, an einer Position zu messen, die sich stromaufwärts eines Anfangsbiegeabschnitts (11b) des ersten Rohrabschnitts befmdet, und um ein erstes Signals auszugeben, das die gemessene Temperatur des Wärmemediums umfasst, wobei der Anfangsbiegeabschnitt von Biegeabschnitten des ersten Rohrabschnitts am weitesten stromaufwärts liegt; und
ein zweites Signalausgabemodul (15), das ausgestaltet ist, um ein zweites Signal auszugeben, um die Erwärmung des Wärmemediums gemäß der Temperatur des Wärmemediums, die in dem ersten Signal umfasst ist, zu steuern.

12. System nach Anspruch 1, wobei der Temperatursensor einen Temperaturerfassungsabschnitt (12a) umfasst, der in dem Rohr und stromabwärts des Ausgangs des Wärmekollektors vorgesehen ist, und die Temperatur des Wärmemediums an einer Position des Temperaturerfassungsabschnitts (12a) misst.

## Revendications

1. Système de collecte de chaleur solaire comprenant :
un collecteur de chaleur (1) configuré afin de chauffer un milieu chauffant par des rayons du soleil ;
un chauffage (14) configuré afin de chauffer un fluide cible chauffant par le milieu chauffant ; et
un tuyau de milieu chauffant (11) configuré afin de faire circuler le milieu chauffant entre le collecteur de chaleur et le chauffage, et afin d'inclure une première partie de tuyau s'étendant depuis une sortie (E₁) du collecteur de chaleur vers le chauffage et une deuxième partie de tuyau s'étendant depuis le chauffage vers le collecteur de chaleur ;
le système comprenant en outre :
une sonde de température (12) configurée afin de mesurer une température du milieu chauffant s'écoulant depuis la sortie (E₁) du collecteur de chaleur vers le chauffage, dans une position située en amont d'une partie pliée initiale (11b) de la première partie de tuyau, la partie pliée initiale étant située le plus en amont parmi des parties pliées de la première partie de tuyau ; et
un système de commande (15) configuré afin de commander le chauffage du milieu chauffant conformément à la température du milieu chauffant mesurée par la sonde de température.

2. Système selon la revendication 1, dans lequel
le collecteur de chaleur inclut un tuyau de collecte de chaleur (2) qui configure une partie du tuyau de milieu chauffant, et un miroir réfléchissant (3) configuré afin de concentrer les rayons du soleil afin de chauffer le milieu chauffant dans le tuyau de collecte de chaleur, et
le système de commande commande le chauffage du milieu chauffant en faisant tourner et en entraînant le miroir réfléchissant.

3. Système selon la revendication 2, dans lequel
le système de commande commande le collecteur de chaleur de sorte que le miroir réfléchissant suive le soleil, lorsque la température du milieu chauffant mesurée par la sonde de température est inférieure à une température limite supérieure prédéterminée, et
le système de commande commande le collecteur de chaleur de sorte que le miroir réfléchissant arrête de suivre le soleil et que le miroir réfléchissant soit réglé afin de s'orienter dans une direction permettant de ne pas concentrer les rayons du soleil vers le tuyau de collecte de chaleur, lorsque la température du milieu chauffant mesurée par la sonde de température est supérieure à la température limite supérieure.

4. Système selon la revendication 1, dans lequel le système de commande commande une quantité de chaleur du milieu chauffant par débit unitaire en modifiant un débit du milieu chauffant qui s'écoule à travers le tuyau de milieu chauffant.

5. Système selon la revendication 4, dans lequel
le système de commande ajuste le débit du milieu chauffant à un premier débit, lorsque la température du milieu chauffant mesurée par la sonde de température est inférieure à une température limite supérieure prédéterminée, et
le système de commande ajuste le débit du milieu chauffant à un second débit qui est supérieur au premier débit, lorsque la température du milieu chauffant mesurée par la sonde de température est supérieure à la température limite supérieure.

6. Système selon la revendication 1, dans lequel le système de commande diminue une quantité de chauffage du milieu chauffant par débit unitaire pour qu'elle soit inférieure à celle obtenue lorsque la température du milieu chauffant est inférieure à une température limite supérieure prédéterminée lorsque la température du milieu chauffant mesurée par la sonde de température est supérieure à la température limite supérieure.

7. Système selon la revendication 1, dans lequel
le tuyau de milieu chauffant inclut une première partie (2a) recouverte d'un tube transparent (4), et une deuxième partie (2b) recouverte d'un matériau retenant la chaleur (8), positionnée en aval de la première partie et positionnée en amont de la partie pliée initiale, et
la sonde de température mesure la température du milieu chauffant dans la deuxième partie.

8. Système selon la revendication 1, dans lequel
le tuyau de milieu chauffant inclut une première partie (2a) recouverte d'un tube transparent (4), et une seconde partie (2b) recouverte d'un matériau retenant la chaleur (8), positionnée en aval de la première partie et positionnée en amont de la partie pliée initiale, et une troisième partie (2c) positionnée entre la première partie et la deuxième partie, et
la sonde de température mesure la température du milieu chauffant dans la deuxième partie, dans la troisième partie, ou sur une limite entre la deuxième partie et la troisième partie.

9. Système selon la revendication 1, dans lequel la sonde de température mesure la température du milieu chauffant dans la position qui est plus proche du miroir réfléchissant qu'un axe central du tuyau de collecte de chaleur.

10. Procédé de commande d'un système de collecte de chaleur solaire comprenant :
un collecteur de chaleur (1) configuré afin de chauffer un milieu chauffant par des rayons du soleil ;
un chauffage (14) configuré afin de chauffer un fluide cible chauffant par le milieu chauffant ; et
un tuyau de milieu chauffant (11) configuré afin de faire circuler le milieu chauffant entre le collecteur de chaleur et le chauffage, et afin d'inclure une première partie de tuyau s'étendant depuis une sortie (E₁) du collecteur de chaleur vers le chauffage et une deuxième partie de tuyau s'étendant depuis le chauffage vers le collecteur de chaleur ;
le procédé comprenant :
la mesure d'une température du milieu chauffant s'écoulant depuis la sortie du collecteur de chauffage vers le chauffage, dans une position située en amont de la partie pliée initiale (11b) de la première partie de tuyau, la partie pliée initiale étant située le plus en amont parmi les parties pliées de la première partie de tuyau ; et
la commande du chauffage du milieu chauffant conformément à la température du milieu chauffant mesurée dans la position située en amont de la partie pliée initiale.

11. Appareil de commande d'un système de collecte de chaleur solaire comprenant :
un collecteur de chaleur (1) configuré afin de chauffer un milieu chauffant par les rayons du soleil ;
un chauffage (14) configuré afin de chauffer un fluide cible chauffant par le milieu chauffant ; et
un tuyau de milieu chauffant (11) configuré afin de faire circuler le milieu chauffant entre le collecteur de chaleur et le chauffage, et afin d'inclure une première partie de tuyau s'étendant depuis une sortie (E₁) du collecteur de chaleur vers le chauffage et une deuxième partie de tuyau s'étendant depuis le chauffage vers le collecteur de chaleur ;
l'appareil comprenant :
un premier module d'émission de signal (12) configuré afin de mesurer une température du milieu chauffant s'écoulant depuis la sortie du collecteur de chaleur vers le chauffage, dans une position située en amont d'une partie pliée initiale (11b) de la première partie de tuyau, et afin d'émettre un premier signal incluant la température mesurée du milieu chauffant, la partie pliée initiale étant située le plus en amont parmi des parties pliées de la première partie de tuyau ; et
un second module d'émission de signal (15) configuré afin d'émettre un second signal permettant de commander le chauffage du milieu chauffant, conformément à la température du milieu chauffant incluse dans le premier signal.

12. Système selon la revendication 1, dans lequel la sonde de température inclut une partie de détection de température (12a) ménagée dans le tuyau et en aval de la sortie du collecteur de chaleur, et mesure la température du milieu chauffant dans une position de la partie de détection de température (12a).
